# EUROPÄISCHE PATENTSCHRIFT

(11) **EP 2 422 125 B1**
(45) Veröffentlichungstag und Bekanntmachung des Hinweises auf die Patenterteilung: **25.09.2013**
(21) Anmeldenummer: 10718478.0
(22) Anmeldetag: 22.04.2010
(51) Int. Cl.: F16K 99/00

(54) **THERMOPNEUMATISCHER AKTOR UND VERFAHREN ZUM HERSTELLEN EINES SOLCHEN**
THERMO PNEUMATIC ACTUATOR AND METHOD OF PRODUCING THE SAME
ACTIONNEUR PNEUMATIQUE THERMIQUE ET SON PROCÉDÉ DE PRDUCTION

(30) Priorität: 23.04.2009 DE 102009018365
(43) Veröffentlichungstag der Anmeldung: 29.02.2012
(73) Patentinhaber: Albert-Ludwigs-Universität Freiburg, 79098 Freiburg (DE)
(72) Erfinder: WOIAS, Peter, 79102 Freiburg (DE); HUESGEN, Till, 79104 Freiburg (DE)
(74) Vertreter: Huwer, Andreas
(86) Internationale Anmeldenummer: PCT/EP2010/002475
(87) Internationale Veröffentlichungsnummer: WO 2010/121813

(56) Entgegenhaltungen:
- WO-A1-2004/025128
- DE-A1-102006 006 706
- US-A1- 2002 096 222
- US-A1- 2005 284 526

## Beschreibung

Die Erfindung betriff einen thermopneunnatischen Aktor nach dem Oberbegriff des Anspruchs 1. Außerdem betrifft die Erfindung ein Verfahren zum Herstellen eines thermopneumatischen Aktors.

Aus US 6 149 123 ist ein Aktor bekannt, der ein Substratplättchen aufweist, in dessen Oberfläche eine Kavität eingelassen ist. Auf dem Substratplättchen ist eine Deckschicht angeordnet, welche die Kavität überdeckt. Die Deckschicht ist hermetisch dicht mit dem die Kavität umgrenzenden Randbereich des Substratplätlchens verbunden. Die Kavität ist mit einem eine Gasphase aufweisenden Arbeitsmedium befüllt, dessen Gasdruck von der Temperatur abhängig ist. Ein der Deckschicht gegenüberliegender Wandungsbereich der Kavität ist als dünne, biegsame Membran ausgebildet die aus einer Neutrallage in mindestens zwei beidseits der Neutrallage befindliche Arbeitslagen auslenkbar ist. In einer ersten Arbeitslage ist die Membran von der Kavität weg gekrümmt, so dass das Volumen der Kavität gegenüber dem Volumen bei in Neutrallage befindlicher Membran vergrößert ist. In einer zweiten Arbeitslage ist die Membran zu der Kavität hin gekrümmt, so dass das Volumen der Kavität gegenüber dem Volumen bei in Neutrallage befindlicher Membran reduziert ist. Zum Verändern des Gasdrucks in der Kavität und zum Verstellen der Membran von der einen in die andere Arbeitslage hat der Aktor eine Temperiereinrichtung, die wärmeleitend mit dem Arbeitsmedium verbunden ist. Mit Hilfe der Temperiereinrichtung kann das Arbeitsmedium beheizt werden..Die Membran steht mit einem in eine Offen- und eine Schließstellung bringbaren Ventilelement in Antriebsverbindung, das in einem Strömungskanal angeordnet ist und ein Sperren oder Freigeben des Durchflusses eines in dem Strömungskanal befindlichen Strömungsmedium ermöglicht. Wenn das Arbeitsmedium einen Überdruck aufweist und die Membran von der Kavität weg gewölbt ist, ist das Ventilelement geöffnet. Wenn der Druck in dem Arbeitsmedium dem Umgebungsdruck entspricht, befindet sich die Membran in der Neutrallage und das Ventilelement ist geschlossen. Der Aktor hat den Nachteil, dass er in mindestens einer der beiden Arbeitslagen ständig Energie aufnimmt.

Aus DE 10 2006 006 706 A1, die die Merkmale des Oberbegriffs des Anspruchs 1 zeigt, und WO 2004/025128 A1 sind auch bereits Aktoren bekannt, deren Membran derart kompressiv vorgespannt oder verspannt ist, dass sie in beiden Arbeitslagen ihre Lage jeweils beibehält, wenn auf die Membran keine äußere Kraft einwirkt. Dadurch wird nur für das Umschalten der Membran von der einen in die andere Arbeitslage Energie benötigt, während für das beibehalten der jeweiligen Arbeitslage keine Energie benötigt wird. Beidseits der Membran sind Kavitäten angeordnet, die mittels einer Heizeinrichtung beheizbar sind, um die Membran umzuschalten. Die beidseits der Membran angeordneten Kavitäten sind jedoch relativ aufwändig.

Aufgabe der Erfindung ist es daher, einen Aktor der eingangs genannten Art zu schaffen, der eine geringe Energieaufnahme ermöglicht, aber dennoch zuverlässig in der jeweiligen Arbeitslage gehalten werden kann und der außerdem einen einfachen Aufbau ermöglicht. Ferner besteht die Aufgabe, ein Verfahren zum Herstellen eines solchen Aktors anzugeben.

Diese Aufgabe wird bezüglich des Aktors mit den Merkmalen des Anspruchs 1 gelöst. Demnach ist die Membran derart kompressiv vorgespannt bzw. verspannt, dass sie ein bistabiles Verhalten aufweist, bei dem sie in beiden Arbeitslagen jeweils Ihre Lage und ihre geometrische Form beibehält, ohne dass dem Aktor von außen Energie zugeführt werden muss. Die Vorspannung der Membran ist so groß gewählt, dass die in der Membran gespeicherte mechanische Energie In beiden Arbeitslagen jeweils ein lokales Minimum aufweist. Die Membran ist also so verspannt, dass die Dehnungsenergie der ebenen, in Neutrallage befindlichen Membran größer ist als die Dehnungsenergie der gewölbten, in Arbeitslage befindlichen Membran. Die Membran weist in der Neutrallage ein lokales Maximum der mechanischen Energie auf Dadurch ist die Neutrallage instabil.

Nur zum Verstellen der Membran von der einen in die andere Arbeitslage wird Energie benötigt. Dabei muss das lokale Maximum der mechanischen Energie in Neutrallage überwunden werden. Beim Auslenken der Membran von der einen in die andere Arbeltslage nimmt die in der Membran gespeicherte mechanische Energie - ausgehend von einem der zuerst genannten Arbeitslage zugeordneten ersten Minimum - zunächst bis zum Erreichen eines Maximums zu, um dann bei einer weiteren Auslenkung der Membran bis zum Erreichen eines der anderen Arbeitslage zugeordneten zweiten Minimums wieder abzunehmen. In vorteilhafter Weise wird durch die kompressive Vorspannung der Membran für den Betrieb des Aktors nur eine geringe Energie benötigt, insbesondere wenn der Aktor überwiegend in den Arbeitslagen betrieben wird. Die zum Überwinden des in Neutrallage befindlichen Maximums benötigte Energie kann durch einen senkrecht auf die Membranebene wirkenden Druck bereit gestellt werden, der durch Expansion oder Kompression des Arbeitsmediums erzeugt werden kann.

Die Membran weist eine Betätigungseinrichtung mit mindestens zwei quer zu ihrer Erstreckungsebene übereinander geschichteten Membranschichten auf, wobei die Membranschichten unterschiedliche Längenausdehnungskoeffizienten haben und vorzugsweise stoffschlüssig miteinander verbundenen sind, und wobei der Aktor zusätzlich zu der ersten Temperiereinrichtung eine zweite Temperiereinrichtung aufweist, mittels der mindestens eine Membranschicht zum Auslenken der Membran temperierbar ist. Die zum Überwinden des in Neutrallage der Membran vorhandenen Energiemaximums benötigte Energie wird also durch eine verspannte Schicht aufgebracht. Die Membran kann bei ausgeschalteter zweiter Temperiereinrichtung durch Betätigen der ersten Temperiereinrichtung aus einer ersten Arbeitslage eine zweite Arbeitslage und bei ausgeschalteter erster Temperiereinrichtung durch Betätigen der zweiten Temperiereinrichtung aus der zweiten in die erste Arbeitslage verstellt werden. Somit kann die Membran wahl- oder wechselweise in beide Arbeitslagen positioniert werden, ohne das Arbeitsmedium aktiv zu kühlen.

Die Temperiereinrichtung weist bevorzugt mindestens ein Peltierelement auf Dabei ist es möglich, das Peltierelement in beiden Richtungen zu bestromen, je nach dem, ob das Arbeitsmedium beheizt und somit das Arbeitsmedium expandiert oder gekühlt und somit das Arbeitsmedium komprimiert werden soll. Durch diese Maßnahme kann außerdem sowohl bei hohen als auch bei niedrigen Umgebungstemperaturen jeweils ein zuverlässiges Umschalten zwischen den Arbeitslagen ermöglicht werden.

Bei einer vorteilhaften Ausgestaltung der Erfindung weist der Aktor eine Schichtstruktur mit mehreren übereinander angeordneten Strukturschichten auf, wobei eine erste Strukturschicht durch die Temperiereinrichtung und eine zweite Strukturschicht durch ein die Membran aufweisendes Substratplättchen gebildet ist, und wobei eine dritte Strukturschicht als thermische Isolationsschicht ausgestaltet ist, die zwischen der ersten und der zweiten Strukturschicht angeordnet ist. Das Substratplättchen ist dann durch die Isolationsschicht thermisch von der Temperiereinrichtung entkoppelt was eine schnelle Aufheizung oder Abkühlung des Arbeitsmediums und somit eine schnelle Umschaltung der Membran von der einen in die andere Arbeitslage ermöglicht. Die Ausgestaltung des Aktors als Schichtstruktur ermöglicht außerdem eine einfache und kostengünstige Herstellung des Aktors mit aus der Halbteiterfertigungstechnik bekannten Prozessen.

Bei einer vorteilhaften Ausführungsform der Erfindung hat die Temperiereinrichtung eine Heizeinrichtung, die vorzugsweise einen elektrischen Heizwiderstand aufweist. Ein solcher Heizwiderstand kann ggf auch zusätzlich zu einem Peltierelement vorhanden sein, wodurch beim Beheizen des Arbeitsmediums die Energleaufnahme der Temperiereinrichfung reduziert werden kann.

Zweckmäßigerweise ist der der Heizwiderstand als Beschichtung auf eine thermisch leitend mit dem Arbeitsmedium verbundene Oberfläche des Peltierelement aufgebracht. Dadurch wird eln kompakter und kostengünstiger Aufbau des Aktors ermöglicht.

Vorzugsweise weist die zweite Temperlereinrichtung eine Heizwiderstandsschicht auf, die durch mindestens eine der Membranschichten gebildet ist und/oder wärmeleitend mit den Membranschichten verbunden ist. Die Temperatur der Membranschichten kann dann durch entsprechendes Bestromen der Heizwiderstandsschicht auf einfache Weise eingestelit werden.

Vorteilhaft ist, wenn die Heizwiderstandsschicht von der Kavität beabstandet ist, und wenn die Membran zwischen der Heizwiderstandsschicht und einer an die Kavität angrenzenden Membranschicht eine Wärmeisolationsschicht aufweist, welche die Heizwiderstandsschicht mit der an die Kavität angrenzenden Membranschicht verbindet. Dadurch ergibt sich ein einfacher Aufbau des Aktors, bei dem die Heizwiderstandsschicht thermisch gegen das Arbeitsmedium isoliert sind.

Bei einer vorteilhaften Ausgestaltung der Erfindung weist die Wärmeisolationsschicht mehrere seitlich voneinander beabstandete Stützelemente auf, die jeweils mit einem ersten Endbereich mit der Heizwiderstandsschicht und einem davon beabstandeten zweiten Endbereich mit der an die Kavität angrenzenden Membranschicht verbunden sind, wobei die Wärmeisolationsschicht zwischen den Stützelementen mindestens einen Hohlraum aufweist. Durch den mindestens einen Hohlraum wird eine gute thermische Isolierung zwischen der Heizwiderstandsschicht und dem Arbeitsmedium ermöglicht.

Vorteilhaft ist, wenn die Stützelemente über Gelenkstellen verschwenkbar mit der Heizwiderstandsschicht und/oder der an die Kavität angrenzenden Membranschicht verbunden sind. Die Membran ist dann leichter zwischen den Arbeitslagen verstellbar. Die Gelenkstellen sind vorzugsweise als Festkörpergelenke ausgestaltet. Diese können einen geringeren Querschnitt aufweisen als die Stützelemente.

Die Stützelemente bestehen vorzugsweise aus einem thermisch isolierenden Werkstoff. Dadurch wird eine noch bessere thermische Entkopplung der Membranschichten ermöglicht.

Bei einer Weiterbildung der Erfindung ist vorgesehen, dass die Heizwiderstandsschicht an Stellen, die zu den Stützelementen benachbart sind, einen größeren elektrisch leitenden Querschnitt hat als an Stellen, die weiter von den Stützelementen beabstandet sind. Der elektrische Widerstand und somit der Wärmeeintrag bei einem Stromfluss in der Heizwiderstandsschicht ist dann den zu den Stützelementen benachbarten Stellen entsprechend reduziert, so dass beim Beheizen der Heizwiderstandsschicht noch weniger Wärme über die Stützelemente zu der an die Kavität angrenzenden Membranschicht übertragen wird.

Der erfindungsgemäße Aktor ist vorzugsweise Teil eines Relais, das mindestens zwei in eine Offen- und eine Schließstellung bringbare elektrische Kontakte hat, von denen mindestens eine mit dem Aktor in Antriebsverbindung steht.

Der Aktor kann aber auch Teil eines optischen Schalters sein, der mindestens ein optisch wirksames Element aufweist, das mit dem Aktor in Antriebsverbindung steht und in eine erste sowie eine zweite Schaltposition verstellbar ist, wobei der optische Schalter einen optischen Sender, einen diesem zugeordneten optischen Empfänger und einen zwischen dem Sender und dem Empfänger befindlichen Strahlengang aufweist, und wobei das optische Element in der ersten Schaltposition im Strahlengang und in der zweiten Schaltposition außerhalb des Strahlengangs angeordnet ist. Dabei kann das optische Element beispielsweise ein Blende sein, die in der ersten Schaltposition den Strahlengang unterbricht und in der zweiten Schaltposition den Strahlengang freigibt. Es ist aber auch möglich, dass das optische Element als Ablenkelement, Filter und/oder Polarisator ausgestaltet ist.

Der erfindungsgemäße Aktor kann auch Teil eines Mikroventils sein, das mindestens ein mit dem Aktor in Antriebsverbindung stehendes, in eine Offen- und eine Schließstellung bringbares, in einem Strömungskanal angeordnetes Ventilteil aufweist. Dabei kann das Ventilteil auch durch die Membran selbst gebildet sein. Bei einem Mikroventil betragen die lateralen Abmessungen der Membran typischerweise etwa zwischen 1,5 und 5 Millimetern. Der Membranhub beträgt typischerweise etwa 20 bis 100 µm.

Die vorstehend genannte Aufgabe wird bezüglich des Verfahrens dadurch gelöst, dass ein Substratplättchen bereitgestellt wird, auf das eine Verspannungsschicht derart aufgebracht wird, dass das Substratplättchen in der Ebene, in der es sich erstreckt, gedehnt und die Verspannungsschicht komprimiert wird, dass auf die Verspannungsschicht Seitenbegrenzungswände für eine Kavität aufgebracht werden, dass an den Seitenbegrenzungswänden eine Wand einer Temperiereinrichtung derart positioniert wird, dass die Wand die Kavität abdeckt, dass die Wand durch einen Bondschritt mit den Seitenbegrenzungswänden verbunden wird, dass zum Herstellen einer Membran an der der Kavität abgewandten Rückseite eines die Kavität überdeckenden Teilbereichs des Substratplättchens mit Abstand zu dessen Rand derart Material abgetragen wird, dass die Wandstärke des Substratplättchens im Bereich der Membran geringer ist als in einem die Membran umgrenzenden Bereich des Substratplättchens und die Membran unter Ausbildung einer Wölbung kompressiv vorgespannt oder verspannt wird, dass die Kavität mit einem Arbeitsmedium befüllt wird, das bei einer Temperaturänderung sein Volumen und/oder seinen Gasdruck verändert, und dass die Kavität danach hermetisch abgedichtet wird.

Die Wandstärke der Membran wird dabei so auf die durch die Verspannungsschicht auf die Membran ausgeübte Kompressionsspannung abgestimmt, dass sich die Membran während des Materialabtrags wölbt und quer zu der Ebene, in der sich das Substratplättchen erstreckt, aus einer Neutrallage ausgelenkt wird. Die Membran ist also derart kompressiv vorgerspannt oder verspannt, dass sie eine Wölbung aus der Ebene heraus ausbildet.

Vorteilhaft ist, wenn auf der Verspannungsschicht und/oder den Seitenbegrenzungswänden Positionierelemente aufgebracht werden, und wenn die Wand der Temperiereinrichtung formschlüssig zwischen die Positionierelemente eingesetzt wird. Die der Temperiereinrichtung wird dann nach dem Positionieren an den Seitenbegrenzungswänden durch die Positionierelemente gegen seitliches Verschieben relativ zum Substratplättchen fixiert.

Nachfolgend sind Ausführungsbeispiele der Erfindung anhand der Zeichnung näher erläutert. Es zeigen:
- Fig. 1: einen Querschnitt durch ein erstes Ausführungsbeispiel eines thermopneumatischen Aktors, der eine Kavität aufweist, die mit einem Arbeitsmedium befüllt ist,
- Fig. 2: eine graphische Darstellung der elektrischen Ansteuerspannung an einem zur Temperierung des Arbeitsmediums vorgesehenen Peltierelement des Aktors sowie der Membranauslenkung, wobei auf der Abszisse die Zeit t, auf der linken Ordinate die Membranauslenkung x und auf der rechten Ordinate die Ansteuerspannung aufgetragen sind,
- Fig. 3: einen Querschnitt durch ein zweites Ausführungsbeispiel des thermopneumatischen Aktors,
- Fig. 4: einen vergrößerten Ausschnitt von Fig. 2, auf dem eine Membran erkennbar ist,
- Fig. 5: eine Aufsicht auf ein Widerstandselement einer Heizwiderstandsschicht der Membran,
- Fig. 6A bis 6F: Querschnitte durch ein Substratplättchen, auf dem der Aktor hergestellt wird, während der einzelnen Verfnhrensschritte eines Herstellungsprozesses,
- Fig. 7: einen Querschnitt durch ein mikromechanisches Ventil, wobei sich das Ventil in Offenstellung befindet,
- Fig. 8: eine Darstellung ähnlich der in Fig. 7, wobei sich jedoch das Ventil in Schließstellung befindet,
- Fig. 9: einen Querschnitt durch ein mikromechanisches Relais, und
- Fig.10: einen Querschnitt durch einen optischen Schalter.

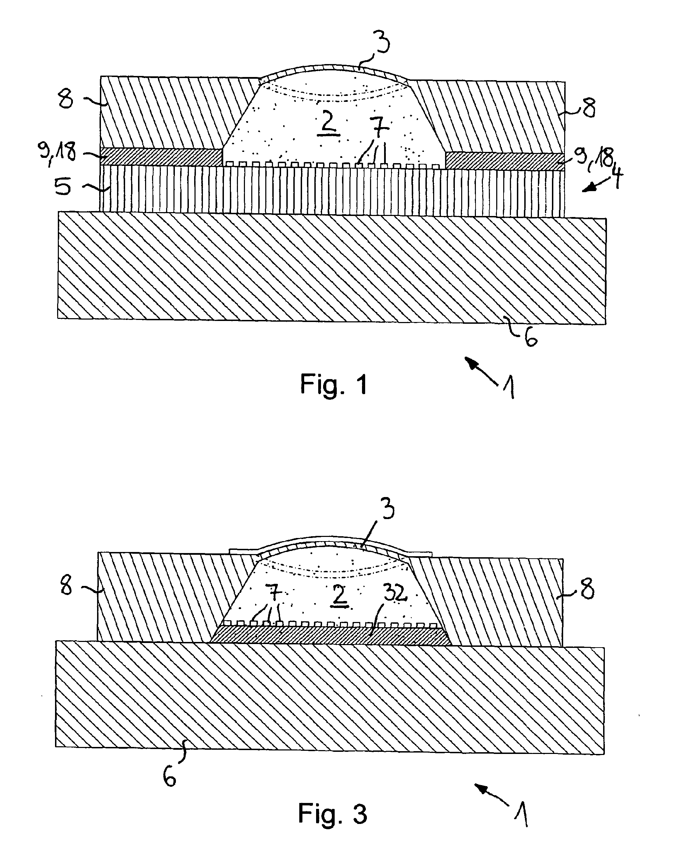

Ein in Fig. 1 im Ganzen mit 1 bezeichneter thermopneumatischer Aktor weist eine durch Wandungen begrenzte, hermetisch abgedichtete Kavität 2 auf, die mit einem Arbeitsmedium befüllt ist. Das Arbeitsmedium kann ein Gas, wie z.B. Luft oder eine Flüssigkeit sein, die beim Verdampfen ihr Volumen ausdehnt. Ebenso ist kann das Arbeitsmedium eine Mischung aus einem Gas und einer solchen Flüssigkeit sein. Der Gasdruck des Arbeitsmediums ist von der Temperatur abhängig und steigt mit zunehmender Temperatur an.

Ein Wandungsbereich der Kavität 2 ist als biegsame Membran 3 ausgebildet, die aus einer Neutrallage, in der die Membran etwa in einer Ebene angeordnet ist, in eine erste, in Fig. 1 durch strichpunktierte Linien dargestellte Arbeitslage und eine zweite, in Fig. 1 durch durchgezogene Linien dargestellte Arbeitslage verstellbar ist. In der ersten Arbeitslage ist die Membran 3 in eine erste, in Richtung auf die Kavität 2 weisende Richtung und in der zweiten Arbeitslage in eine zu der ersten Richtung entgegen gesetzte, zweite Richtung gekrümmt. Deutlich ist erkennbar, dass die Auslenkung der Membran 3 in beiden Arbeitslagen, jeweils ausgehend vom Rand der Membran 3 zu deren Mitte hin zunimmt und dann zum gegenüberliegenden Rand der Membran 3 hin wieder abnimmt. Dabei wird unter der Auslenkung der Abstand, den die Membran 3 an der betreffenden Stelle zu einer etwa mittig zwischen den beiden Arbeitslagen befindlichen Ebene aufweist, in einer normal zu dieser Ebene verlaufenden Richtung verstanden.

Zum Temperieren des Arbeitsmediums hat der Aktor eine Temperiereinrichtung 4, die bei dem in Fig. 1 gezeigten Ausführungsbeispiel eine Kühl- und eine Heizeinrichtung umfasst. Die Kühleinrichtung weist ein in der Zeichnung nur schematisch dargestelltes Peltierelement 5 auf, das zwischen zwei Substratplatten eine Vielzahl von nebeneinanderbefindlichen Halbleiteranordnungen aufweist, die jeweils zwei Halbleiter haben, die ein unterschiedliches Energieniveau besitzen. Die Halbleiter sind über Kontaktflächen miteinander verbunden. Die Halbleiteranordnungen sind elektrisch in Reihe geschaltet und mit einer in der Zeichnung nicht näher dargestellten Stromquelle verbunden. Eine erste, der Kavität 2 zugewandte Kontaktfläche jeder Halbleiteranordnung ist jeweils mit dem Arbeitsmedium und eine zweite, der Kavität 2 abgewandte Kontaktfläche mit einer Wärmesenke 6 flächig wärmeleitend verbunden. Mechanisch sind die Halbleiteranordnungen parallel geschaltet.

Zum Kühlen des Arbeitsmediums wird das Peltierelement 5 derart bestromt, dass die kühle Seite des Peltierelements 5 der Kavität 2 und die warme Seite der Wärmesenke 6 zugewandt ist, so dass dem Arbeitsmedium Wärmeenergie entzogen und in die Wärmesenke 6 abgeleitet wird. Dabei reduziert sich der Gasdruck in der Kavität auf einen Wert, der geringer ist als der Umgebungsdruck des Aktors 1, so dass sich die Membran zur Kavität hin wölbt. Bei Bedarf kann das Arbeitsmedium durch Umkehren der Stromrichtung auch mit dem Peltierelement 5 beheizt werden.

In Fig. 1 ist erkennbar, dass die Heizeinrichtung einen elektrischen Heizwiderstand 7 aufweist, der als Beschichtung auf die der Kavität 2 zugewandte Oberfläche des Peltierelements 5 aufgebracht ist. Der Heizwiderstand 7 weist mehrere nebeneinander verlaufende Widerstandsbahnen auf, die in Reihe geschaltet sind und an das Arbeitmedium angrenzen. Der Heizwiderstand 7 ist mit einer in der Zeichnung nicht näher dargestellten Stromquelle verbunden, mittels welcher der Heizwiderstand 7 zum Beheizen des Arbeitsmediums bestromt werden kann. Dabei steigt der Gasdruck in der Kavität auf einen Wert, der größer ist als der Umgebungsdruck des Aktors 1, so dass sich die Membran von der Kavität weg nach außen wölbt.

Die Membran 3 ist in der Neutrallage derart in ihrer Erstreckungsebene kompressiv vorgespannt, dass die Membran 3 bistabil ist und sowohl in der ersten Arbeitslage als auch in der zweiten Arbeitslage jeweils ihre Lage beibehält, wenn auf die Membran 3 quer zu der Fläche, in der sich erstreckt, keine oder nur eine geringe äußere Kraft einwirkt. Dadurch ist es möglich, nach dem Positionieren der Membran 3 in der betreffenden Arbeitslage die Temperiereinrichtung 4 abzuschalten, ohne dass die Membran nennenswert aus der Arbeitslage ausgelenkt wird. Mit zunehmender Auslenkung der Membran 3 reduziert sich die durch die Verspannung bewirkte Druckspannung in der Membran 3 zu beiden Seiten der Neutrallage hin. In Fig. 1 ist noch erkennbar, dass das Peltierelement 5 und der Heizwiderstand 7 durch die Kavität 2 von der Membran 3 beabstandet ist, d.h. das Peltierelement 5 bzw. der Heizwiderstand 7 einerseits und die Membran 3 andererseits sind an einander gegenüberliegenden Seiten der Kavität 2 angeordnet.

Außerdem ist erkennbar, dass der Aktor 1 eine Schichtstruktur mit mehreren übereinander angeordneten Strukturschichten aufweist. Eine erste Strukturschicht ist durch die Temperiereinrichtung 4 und eine zweite Strukturschicht durch ein die Membran 3 aufweisendes Substratplättchen 8 gebildet. Im Bereich der Membran 3 ist die Wandstärke des Substratplättchens 8 reduziert. Das Substratplättchen 8 weist zu diesem Zweck an einer der der Temperiereinrichtung 4 zugewandten Rückseite eine Vertiefung auf Eine dritte Strukturschicht ist als thermische Isolationsschicht 9 ausgestaltet. Diese ist zwischen der Temperiereinrichtung 4 und dem Substratplätt chen 8 angeordnet, um das Substratplöttchen 8 von der Temperiereinrichtung 4 thermisch zu entkoppeln.

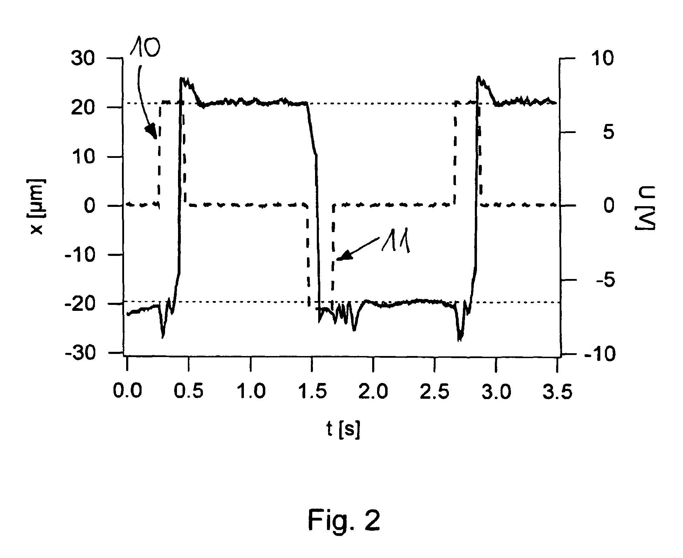

In Fig. 2 ist erkennbar, dass die in der ersten Arbeitslage befindliche Membran 3 nach dem Anlegen eines Heizpulses 10 an das Peltierelement 5 fast sprungartig von der Kavität 2 weg in die zweite Arbeitslage ausgelenkt wird, und dass die zweite Arbeitslage auch nach Beendigung des Heizpulses 10 im Wesentlichen beibehalten wird. In entsprechender Weise wird die Membran 3 nach dem Ausgeben eines Kühlpulses 11 an das Peltierelement 5 fast sprungartig in Richtung auf die Kavität 2 zu ausgelenkt, bis sie die erste Arbeitslage erreicht. Die erste Arbeitslage wird nach Beendigung des Kühlpulses 11 im Wesentlichen beibehalten.

Bei dem in Fig. 3 bis 5 gezeigten Ausführungsbeispiel entfällt das Peltierelement. Auf der Wärmesenke 6 ist unterhalb der Kavität 2 eine Wärmeisolierschicht 32 angeordnet, auf dessen der Kavität 2 zugewandter Oberfläche der Heizwiderstand 7 aufgebracht ist. Im Unterschied zu dem in Fig. 1 gezeigten Ausführungsbeispiel ist zwischen dem Substratplättchen 8 und der Wärmesenke 6 keine thermische Isolationsschicht angeordnet, so dass Wärme von dem Substratplöttchen 8 gut an die Wärmesenke 6 abgeführt werden kann.

Die Membran 3 hat eine Betätigungseinrichtung, die zwei quer zur Erstreckungsebene der Membran 3 übereinander geschichtete Membranschichten 12, 13 aufweist Die Membranschichten 12, 1 3 haben unterschiedliche Längenausdehnungskoeffizienten und sind über eine Wärmeisolationsschicht stoffschlüssig miteinander verbunden. Eine erste Membranschicht 12 grenzt an die Kavität 2 an und eine zweite Membranschicht 1 3 ist von der Kavität 2 beabstandet.

Die zweite Membranschicht 1 3 ist elektrisch leitend und als Heizwiderstandsschicht ausgestaltet, die zu ihrem Beheizen mit einer in der Zeichnung nicht näher dargestellten Stromquelle verbindbar ist. Wenn die Temperatur in der zweiten Membranschicht 1 3 zunimmt, verspannen sich die Membranschichten 12, 13 gegeneinander, wodurch die Membran 3 in Richtung auf die Kavität 2 hin ausgelenkt wird.

Die Wörmelsolaflonsschicht ist zwischen der ersten Membranschicht 12 und der zweiten Membranschicht 1 3 angeordnet und weist mehrere seitlich voneinander beabstandete säulenartige Stützelemente 14 auf, die quer zu der Fläche angeordnet sind, in der sich die Membran 3 erstreckt. Die Stützelemente 14 sind seitlich voneinander beabstandet und jeweils mit einem ersten Endbereich mit der ersten Membranschicht 12 und mit einem davon beabstandeten zweiten Endbereich mit der zweiten Membranschicht 1 3 verbunden. Zwischen den Stützelementen 14 ist ein Hohlraum 1 S gebildet, der die zweite Membranschicht 13 thermisch gegen das in der Kavität 2 befindliche Arbeitsmedium isoliert. Die Stützelemente 14 bestehen aus einem wärmeisolierenden Werkstoff und sind jeweils an dem ersten Endbereich über ein erstes Festkörpergelenk mit der ersten Membranschicht 12 und mit dem zweiten Endbereich über ein zweites Festkörpergelenk mit der zweiten Membranschicht 13 verbunden.

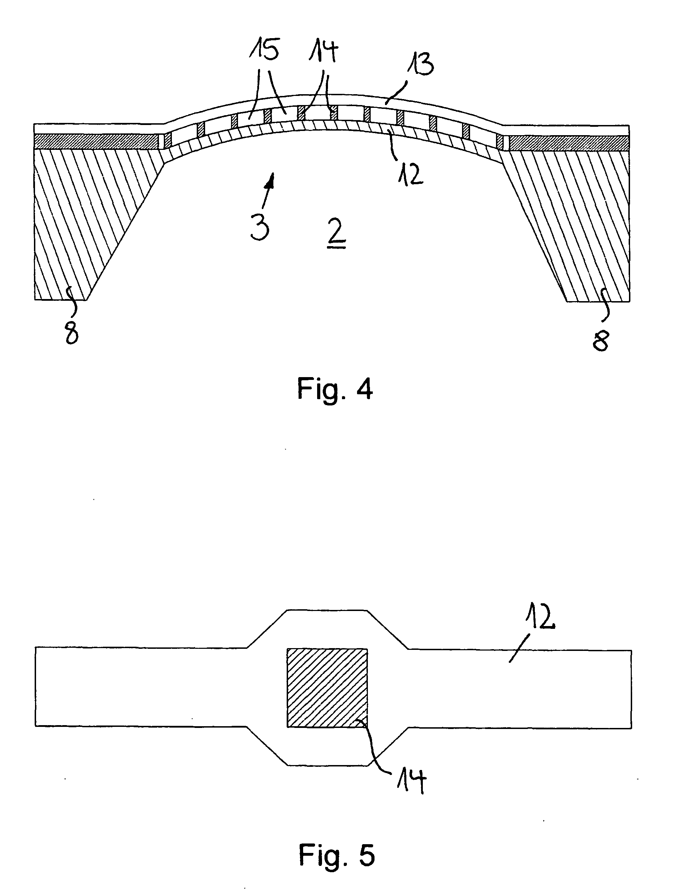

Die Heizwiderstandsschicht hat mehrere bahnförmige Widerstandselemente, die den Hohlraum 15 und die Stützelemente 14 überdecken und seitlich voneinander beabstandet sind. In Fig. 5 ist erkennbar, dass die durch die Heizwiderstandsschicht gebildeten Widerstandselemente an Stellen, die benachbart zu den Stützelementen 14 und insbesondere in gerader Verlängerung der Stützelemente 14 angeordnet sind, einen größeren elektrisch leitenden Querschnitt haben als an Stellen, die weiter von den Stützelementen 14 beabstandet sind. Dies wird dadurch erreicht, dass die Widerstandselemente an den zuerst genannten Stellen breiter sind als an Stellen, die weiter von den Stützelementen 14 entfernt sind. Der durch die Widerstandselemente fließende Strom erwärmt dadurch die Widerstandselemente an den zu den Stützelementen 14 benachbarten Stellen weniger stark als an Stellen, die weiter von den Stützelementen 14 beabstandet sind. Somit reduziert sich beim Beheizen der zweiten Membranschicht 13 der Wärmeeintrag in die Stützstellen und somit in die erste Membranschicht 12 entsprechend. Gleichzeitig wird durch diese Maßnahme beim Beheizen des Arbeitsmediums mit dem Heizwiderstand 7 die Wärmeübertragung vom Arbeitsmedium auf die zweite Membranschicht 13 reduziert.

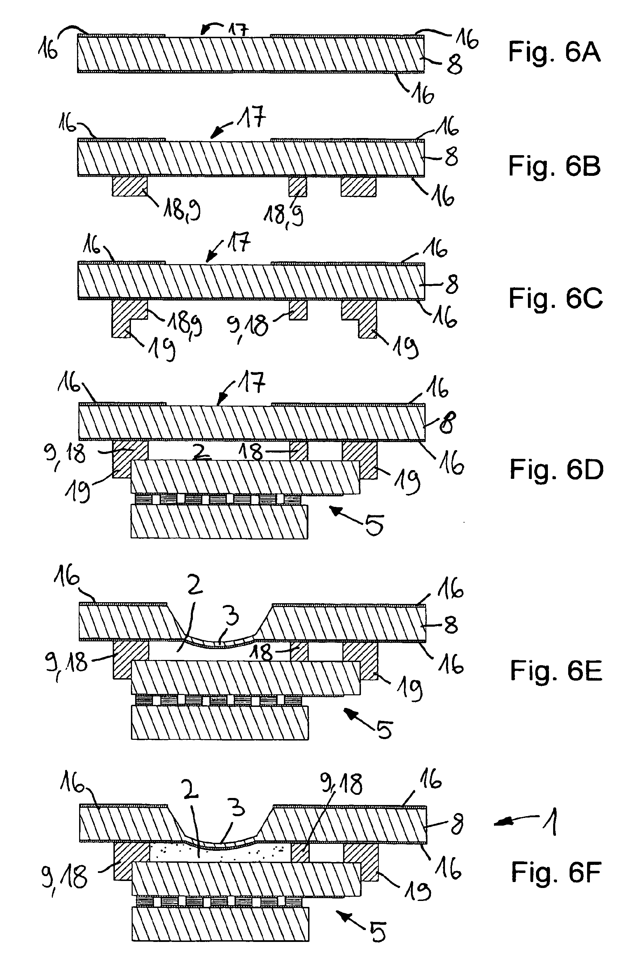

Zum Herstellen des Aktors 1 wird zunächst ein Substratplättchen 8 bereitgestellt, auf das beidseitig eine Verspannungsschicht 16 derart aufgebracht wird, dass die Verspannungsschicht 16 mit einer Druckspannung und das Substratplättchen 8 mit einer Zugspannung beaufschlagt wird, die das Substratplättchen 8 in der Ebene, in der es sich erstreckt, dehnt (Fig. 6A). Die Druck- bzw. Zugspannung entsteht beim Abscheiden der Verspannungsschicht 16 auf das Substratplättchen 8, weil der Werkstoff der Verspannungsschicht 16 einen größeren Kristallabstand hat als der Werkstoff des Substratplöttchens 8. Die Schichtspannungen können auch durch unterschiedliche thermische Ausdehnungskoeffizienten und eine gegenüber der Temperatur des Substratplättchens 8 erhöhte Abscheidetemperatur hervorgerufen werden. Außerdem können prozessbedingte Verunreinigungen die Schichtspannungen bewirken.

Als Werkstoff für das Substratplättchen 8 wird bevorzugt einkristallines Silizium und als Werkstoff für die Verspannungsschicht 16 Siliziumdioxid gewählt. Die Erfindung ist aber nicht auf diese Werkstoffe beschränkt. Es sind auch andere Werkstoffe möglich, bei denen aus mindestens einem der oben genannten Gründe kompressive Schichtspannungen in der Membran 3 auftreten.

An der Rückseite des Substratplöttchens 8 weist die Verspannungsschicht 16 in einem Substratbereich, in dem in einem späteren Verfahrensschritt Substratmaterial abgetragen werden soll, eine vom Rand des Substratplättchens 8 beabstandete Öffnung 17 auf

Nun werden an der Vorderseite des Substratplättchens 8 Seitenbegrenzungswände 18 für eine Kavität 2 photolithographisch auf die Verspannungsschicht 17 aufgebracht (Fig. 6C). Die Seitenbegrenzungswände 18 bestehen vorzugsweise aus einem Permanent-Photoresist. In Fig. 6D ist erkennbar, dass auf die Seitenbegrenzungswände 18 und das Substratplättchen 8 Positionierelemente 19 photolithographisch aufgebracht werden.

In einem weiteren, in Fig. 6D dargestellten Verfahrensschritt wird an den Seitenbegrenzungswänden 1 8 eine temperierbare Wand eines Peltierelements 5 derart positioniert, dass die Wand die Kavität 2 abdeckt. Dabei kommt das Peltierelement 5 derart an den Positionierelementen 19 zur Anlage, dass es formschlüssig zwischen den Positionierelementen 19 fixiert ist. Dann wird die Wand das Peltierelements 5 durch einen Bondschritt mit den Seitenbegrenzungswänden 18 und/oder den Positionierelementen 19 verbunden.

Nun wird zum Herstellen einer einstückig mit dem Substratplättchen 8 verbundenen Membran 3 an der Öffnung 17 Material vom Substratplättchen 8 abgetragen, um die Wandstärke des Substratplättchens 8 zu reduzieren. Aufgrund der Verspannung des Substratplättchens 8 wölbt sich die Membran 3 elastisch von der Kavität 2 weg.

Dann wird die Kavität 2 über mindestens einen in der Zeichnung nicht näher dargestellten Kanal mit einem Arbeitsmedium befällt, das bei einer Temperaturänderung sein Volumen und/oder seinen Gasdruck verändert (Fig. 6F). Anschließend wird der mindestens eine Kanal beispielsweise mit einem Epoxydharz versiegelt, um die Kavität 2 hermetisch abzudichten und das Arbeitmedium in der Kavität 2 einzuschließen.

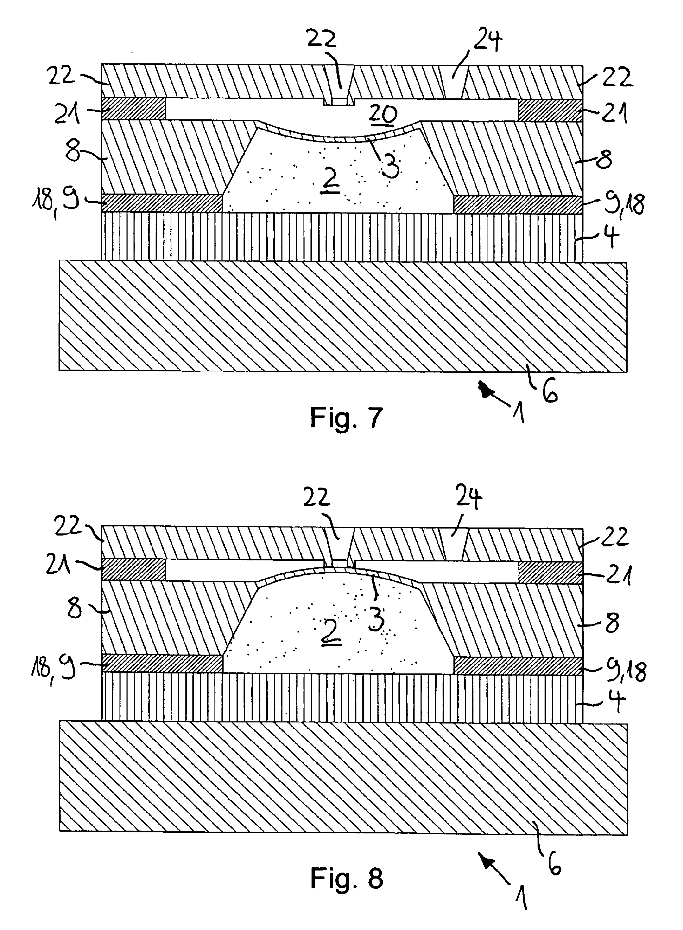

In Fig. 7 und 8 ist erkennbar, dass der Aktor 1 Teil eines Mikroventils sein kann, das einen Strömungskanal 20 für ein fließfähiges Medium aufweist. Der Strömungskanal 20 ist zwischen dem Substratplättchen 8 und einem darauf aufgebrachten, durch eine Distanzschicht 21 vom Substratplättchen 8 beabstandeten weiteren Plättchen 22 gebildet.

In dem Strömungskanal 20 sind eine Ventilöffnung 23 und eine weitere Öffnung 24 hintereinander angeordnet. Die Ventilöffnung 23 befindet sich gegenüber der Membran 3. Diese ist auf die Ventilöffnung 23 zu- und von der Ventilöffnung 23 wegbewegbar. In einer Offenstellung (Fig. 7) ist die Membran 3 von der Ventilöffnung 23 beabstandet und in einer Schließstellung (Fig. 8) liegt die Membran 3 an der Ventilöffnung 23 an und dichtet diese gegen das fließfähige Medium ab.

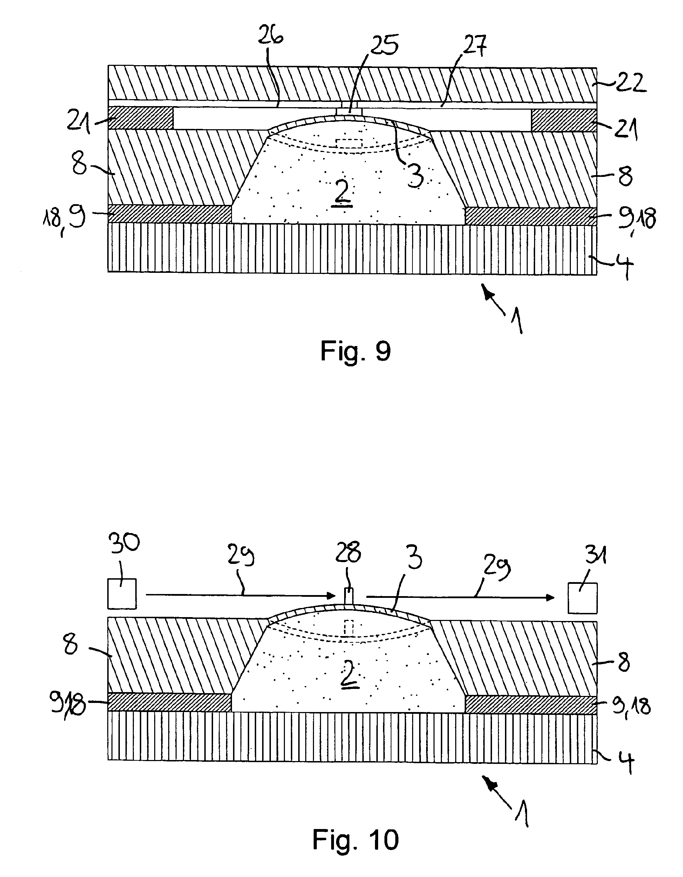

In Fig. 9 ist erkennbar, dass der Aktor 1 auch Teil eines Relais sein kann. Das Relais weist drei in eine Offen- und eine Schließstellung bringbare elektrische Kontakte auf Ein erster Kontakt 25 ist an der der Kavität 2 abgewandten Seite der Membran 3 etwa mittig zu dieser angeordnet und mit der Membran 3 verbunden. Zwei zweite Kontakte 26, 27 sind an einem durch eine Distanzschicht 21 vom Substratplättchen 8 beabstandeten weiteren Plättchen 22 mit seitlichem Abstand zueinander angeordnet und dem ersten Kontakt 25 zugewandt. Der erste Kontakt 25 ist zusammen mit der Membran 3 auf die zweiten Kontakt 26, 27 zu- und von diesen wegbewegbar. In der in Fig. 9 strichliniert angedeuteten Offenstellung ist der erste Kontakt 25 von den zweiten Kontakten 26, 27 beabstandet und in der Schließstellung kommt der erste Kontakt 25 an beiden zweiten Kontakten 26,27 zur Anlage, so dass diese überbrückt und elektrisch miteinander verbunden werden.

In Fig. 10 ist erkennbar, dass der Aktor 1 auch Teil eines optischen Schalters sein kann. Der Schalter hat ein optisch wirksames Element 28, das an der der Kavität 2 abgewandten Seite der Membran 3 etwa mittig zu dieser angeordnet und mit der Membran 3 verbunden ist. Mit Hilfe des Aktors 1 ist das optisch wirksame Element 28 in eine erste und eine zweite Schaltposition verstellbar. In der ersten Schaltposition ist das Element 28 innerhalb eines Strahlengangs 29 positioniert, der zwischen einem optischen Sender 29 und einem damit zusammenwirkenden optischen Empfänger 30 gebildet ist. In der ersten Schaltposition ist der Strahlengang durch das Element 28 unterbrochen. In der zweiten, in Fig. 10 strichliniert angedeuteten Schaltposition ist das Element 28 außerhalb des Strahlengangs 29 positioniert, so dass eine vom Sender 29 ausgesendete Strahlung mit Hilfe des Empfängers 30 detektiert werden kann.

## Patentansprüche

1. Thermopneumatischer Aktor (1) mit einer durch Wandungen begrenzten, hermetisch abgedichteten Kavität (2), die mit einem Arbeitsmedium befüllt ist, das bei einer Temperaturänderung seinen Gasdruck verändert, wobei ein Wandungsbereich der Kavität (2) als biegsame Membran (3) ausgebildet ist, die in mindestens zwei beidseits einer Neutrallage befindliche Arbeitslagen auslenkbar ist, in denen die Membran (3) in zueinander entgegen gesetzte Richtungen gekrümmt ist, mit einer Temperiereinrichtung (4), die zum Verändern des Gasdrucks in der Kavität (2) und zum Verstellen der Membran (3) von der einen in die andere Arbeitslage wärmeleitend mit dem Arbeitsmedium verbunden ist, wobei die Membran (3) in der Neutrallage derart kompressiv vorgespannt oder verspannt ist, dass sie in beiden Arbeitslagen ihre Lage jeweils beibehält, wenn auf die Membran (3) keine äußere Kraft einwirkt, **dadurch gekennzeichnet, dass** die Membran (3) eine Betätigungseinrichtung mit mindestens zwei quer zu ihrer Erstreckungsebene übereinander geschichteten Membranschichten (12, 13) aufweist, dass die Membranschichten (12, 13) unterschiedliche Längenausdehnungskoeffizienten haben, und dass der Aktor (1) zusätzlich zu der ersten Temperiereinrichtung (4) eine zweite Temperiereinrichtung aufweist, mittels der mindestens eine Membranschicht (13) zum Auslenken der Membran (3) temperierbar ist.

2. Thermopneumatischer Aktor (1) nach Anspruch 1, **dadurch gekennzeichnet, dass** die zweite Temperiereinrichtung eine Heizwiderstandsschicht aufweist, die durch mindestens eine der Membranschichten (12, 13) der Betötigungseinrichtung gebildet ist und/oder wärmeleitend mit den Membranschichten (12, 13) verbunden ist.

3. Thermopneumafischer Aktor (1) nach Anspruch 1 oder 2, **dadurch gekennzeichnet, dass** die Heizwiderstandsschicht von der Kavität (2) beabstandet ist, und dass die Membran (3) zwischen der Heizwiderstandsschicht und einer an die Kavität (2) angrenzenden Membranschicht (12) eine Wärmeisolationsschicht aufweist, welche die Heizwiderstandsschicht mit der an die Kavität (2) angrenzenden Membranschicht (12) verbindet.

4. Thermopneumatischer Aktor (1) nach Anspruch 3, **dadurch gekennzeichnet, dass** die Wärmeisolationsschicht mehrere seitlich voneinander beabstandete Stützelemente (14) aufweist, die jeweils mit einem ersten Endbereich mit der Heizwiderstandsschicht und einem davon beabstandeten zweiten Endbereich mit der an die Kavität (2) angrenzenden Membranschicht (12) verbunden sind, und dass die Wärmeisolationsschicht zwischen den Stützelementen (12, 13) mindestens einen Hohlraum (15) aufweist.

5. Thermopneumatischer Aktor (1) nach Anspruch 4, **dadurch gekennzeichnet, dass** die Stützelemente (14) über Gelenkstellen verschwenkbar mit der Heizwiderstandsschicht und/oder der an die Kavität (2) angrenzenden Membranschicht (12) verbunden sind.

6. Thermopneumatischer Aktor (1) nach Anspruch 4 oder 5, **dadurch gekennzeichnet, dass** die Stützelemente (12, 1 3) aus einem thermisch isolierenden Werkstoff bestehen.

7. Thermopneumafischer Aktor (1) nach einem der Ansprüche 1 bis 6, **dadurch gekennzeichnet, dass** die Heizwiderstandsschicht an Stellen, die zu den Stützelementen (12) benachbart sind, einen größeren elektrisch leitenden Querschnitt hat als an Stellen, die weiter von den Stützelementen (12) beabstandet sind.

8. Thermopneumafischer Aktor (1) nach einem der Ansprüche 1 bis 7, **dadurch gekennzeichnet, dass** die erste Temperiereinrichtung (4) mindestens ein Peltierelement (5) aufweist.

9. Thermopneumatischer Aktor (1) nach einem der Ansprüche 1 bis 8, **dadurch gekennzeichnet, dass** die Temperiereinrichtung (4) eine Heizeinrichtung hat, die vorzugsweise einen elektrischen Heizwiderstand (7) aufweist.

10. Thermopneumatischer Aktor (1) nach Anspruch 9, **dadurch gekennzeichnet, dass** ein Heizwiderstand (7) als Beschichtung auf eine thermisch leitend mit dem Arbeitsmedium verbundene Oberfläche des Peltierelements (5) aufgebracht ist.

11. Relais mit einem thermoelektrischen Aktor (1) nach einem der Ansprüche 1 bis 10 und mindestens zwei in eine Offen- und eine Schließstellung bringbaren elektrischen Kontakten (25, 26, 27), von denen mindestens einer mit dem Aktor in Antriebsverbindung steht.

12. Optischer Schalter mit einem thermoelektrischen Aktor (1) nach einem der Ansprüche 1 bis 10 sowie mit mindestens einem optisch wirksamen Element (28), das mit dem Aktor (1) in Antriebsverbindung steht und in eine erste und eine zweite Schaltposition verstellbar ist, mit einem optischen Sender (30), einem diesem zugeordneten optischen Empfänger (31) und einem zwischen dem Sender (30) und dem Empfänger (31) befindlichen Strahlengang (29), wobei das optische Element (28) in der ersten Schaltposition im Strahlengang (29) und in der zweiten Schaltposition außerhalb des Strahlengangs (29) angeordnet ist.

13. Mikroventil mit einem thermoelektrischen Aktor (1) nach einem der Ansprüche 1 bis 10 und mindestens einem damit in Antriebsverbindung stehenden, in eine Offen- und eine Schließstellung bringbaren, in einem Strömungskanal (20) angeordneten Ventilteil.

14. Verfahren zum Herstellen eines thermopneumatischen Aktors (1), wobei ein Substratplättchen (8) bereitgestellt wird, auf das eine Verspannungsschicht (16) derart aufgebracht wird, dass das Substratplättchen (8) in der Ebene, in der es sich erstreckt, gedehnt und die Verspannungsschicht (16) komprimiert wird, wobei auf die Verspannungsschicht (16) Seitenbegrenzungswände (18) für eine Kavität (2) aufgebracht werden, wobei an den Seitenbegrenzungswänden (18) eine Wand einer Temperiereinrichtung (4) derart positioniert wird, dass die Wand die Kavität (2) abdeckt, wobei die Wand durch einen Bondschritt mit den Seitenbegrenzungswänden (18) verbunden wird, wobei zum Herstellen einer Membran (3) an der der Kavität (2) abgewandten Rückseite eines die Kavität (2) überdeckenden Teilbereichs des Substratplättchens (8) mit Abstand zu dessen Rand derart Material abgetragen wird, dass die Wandstärke des Substratplättchens (8) im Bereich der Membran (3) geringer ist als in einem die Membran (3) umgrenzenden Bereich des Substratplättchens (8) und die Membran (3) unter Ausbildung einer Wölbung kompressiv vorgespannt oder verspannt wird, wobei die Kavität (2) mit einem Arbeitsmedium befüllt wird, das bei einer Temperaturänderung sein Volumen und/oder seinen Gasdruck verändert, und wobei die Kavität (2) danach hermetisch abgedichtet wird.

15. Verfahren nach Anspruch 14, dass auf der Verspannungsschicht (16) und/oder den Seitenbegrenzungswänden (18) Positionierelemente (19) erzeugt werden, und dass die Wand der Temperiereinrichtung (4) formschlüssig zwischen die Positionierelemente (19) eingesetzt wird.

## Claims

1. Thermo-pneumatic actuator (1) comprising a hermetically sealed cavity (2) delimited by walls, which is inflated with a working medium that alters its gas pressure when a temperature change occurs, wherein a wall area of the cavity (2) is configured as a ductile membrane (3) that can be deflected in at least two working positions located on either side of a neutral position in which the membrane (3) is curved in opposite directions to one another, further comprising a tempering device (4) that is heat-conductively connected to the working medium for altering the gas pressure in the cavity (2) and for adjusting the membrane (3) from one working position to the other workying position, wherein the membrane (3) in the neutral position is compressively pre-loaded or tensioned in such a way that it always maintains its position in both working positions if no outside force impacts the membrane (3), **characterized in that** the membrane (3) comprises an actuation device with at least two membrane layers (12, 1 3) stacked on top of one another perpendicular to its plane of extension, that the membrane layers (12, 1 3) have different linear expansion coefficients and that the actuator (1) comprises, in addition to the first tempering device (4), a second tempering device by means of which at least one membrane layer (1 3) can be tempered in order to deflect the membrane (3).

2. Thermo-pneumatic actuator (1) as in claim 1, **characterized in that** the second tempering device comprises a heating resistor layer, which is formed by at least one of the membrane layers (12, 13) of the actuation device and/or which is heatconductively connected to the membrane layers (12, 13).

3. Thermo-pneumatic actuator (1) as in claim 1 or claim 2, **characterized in that** the heating resistor layer is spaced apart from the cavity (2), and that the membrane (3) comprises, between the heating resistor layer and a membrane layer (12) bordering the cavity (2), a thermal insulation layer that connects the heating resistor layer to the membrane layer (12) bordering the cavity (2).

4. Thermo-pneumatic actuator (1) as in claim 3, **characterized in that** the thermal insulation layer comprises several support elements (14) laterally spaced apart from one another, which in each case are connected by a first end region to the heating resistor layer and by a second end region spaced apart therefrom to the membrane layer (12) bordering the cavity (2), and that the thermal insulation layer comprises at least one hollow space (15) between the support elements (12,1 3).

5. Thermo-pneumatic actuator (1) as in claim 4, **characterized in that** the support elements (14) are pivot-connected via hinged areas to the heating resistor layer and/or to the membrane layer (12) bordering the cavity (2).

6. Thermo-pneumatic actuator (1) as in claim 4 or claim 5, **characterized in that** the support elements (12, 1 3) are composed of a thermally insulating material.

7. Thermo-pneumatic actuator (1) as in any one of claims 1 through 6, **characterized in that** the heating resistor layer has a larger electrically conductive cross-section in places that are adjacent to the support elements (12) than in places that are spaced further apart from the support elements (12).

8. Thermo-pneumatic actuator (1) as in any one of claims 1 through 7, **characterized in that** the tempering device (4) comprises at least one Peltier element (5).

9. Thermo-pneumatic actuator (1) as in any one of claims 1 through 8, **characterized in that** the tempering device (4) has a heating device that preferably comprises an electric heating resistor (7).

10. Thermo-pneumatic actuator (1) as in claim 9, **characterized in that** a heating resistor (7) is applied as a coating on a surface of the Peltier element (5) that is heatconductively connected to the working medium.

11. Relay with a thermo-electric actuator (1) as in any one of claims 1 through 10 and at least two electric contacts (25, 26, 27) moveable between an open position and a closed position, of which at least one is drive-connected to the actuator.

12. Optical switch with a thermo-electric actuator (1) as in any one of claims 1 through 10, as well as with at least one optically acting element (28), which is driveconnected to the actuator (1) and moveable between a first switch position and a second switch position, with an optical transmitter (30), an optical receiver (31) allocated thereto, and a beam path (29) located between the transmitter (30) and the receiver (31), wherein the optical element (28) is aligned in the beam path (29) in the first switch position and outside the beam path (29) in the second switch position.

13. Microvalve with a thermo-electric actuator (1) as in any one of claims 1 through 10 and at least one valve component that is drive-connected thereto, moveable between an open position and a closed position, and arranged in a flow channel (20).

14. Method for producing a thermo-pneumatic actuator (1), wherein provision is made of a substrate plate (8) on which is applied a tensioning layer (16) in such a way that the substrate plate (8), in its plane of extension, is expanded and the tensioning layer (16) is compressed, wherein side-delimiting walls (18) for a cavity (2) are attached to the tensioning layer (16), wherein a wall of a tempering device (4) is positioned on the side-delimiting walls (18) in such a way that the wall covers the cavity (2), wherein the wall is connected to the side-delimiting walls (18) in a bonding step, wherein for producing a membrane (3) on the back side facing away from the cavity (2) of a subarea of the substrate plate (8) overlapping the cavity (2) and spaced apart from the edge thereof, material is removed in such a way that the wall thickness of the substrate plate (8) in the area of the membrane (3) is less than in an area of the substrate plate (8) surrounding the membrane (3) and the membrane (3) is compressively pre-loaded or tensioned under formation of a curve, wherein the cavity (2) is inflated with a working medium that alters its volume and/or its gas pressure when a temperature change occurs, and wherein the cavity (2) is hermetically sealed afterwards.

15. Method as in 14, that positioning elements (19) are created on the tensioning layer (16) and/or the side-delimiting walls (18), and that the wall of the tempering device (4) is form-fittingly inserted between the positioning elements (19).

## Revendications

1. Actionneur (1) pneumatique thermique avec une cavité (2) hermétiquement étanchéifiée délimitée par des parois, qui est remplie d'un milieu d'exploitation qui modifie sa pression de gaz en cas de variation de température, pour lequel une zone de paroi de la cavité (2) est formée comme une membrane (3) souple qui est orientable dans au moins deux positions de travail situées des deux côtés d'une position neutre dans lesquelles la membrane (3) est courbée dans des directions opposées l'une à l'autre avec un dispositif d'équilibrage de température (4) qui est relié par moyen thermoconducteur avec le milieu d'exploitation pour modifier la pression de gaz dans la cavité (2) et pour déplacer la membrane (3) d'une position de travail dans l'autre, pour lequel la membrane (3) est prétendue ou contractée dans la position neutre de façon compressive de telle sorte qu'elle conserve à chaque fois sa position dans les deux positions de travail, si aucune force extérieure n'agit sur la membrane (3), **caractérisé en ce que** la membrane (3) présente un dispositif de commande avec au moins deux couches de membrane (12, 13) superposées l'une sur l'autre transversalement à leur plan d'extension, **en ce que** les couches de membrane (12, 13) possèdent différents coefficients de dilatation longitudinale et **en ce que** l'actionneur (1) présente en plus du premier dispositif d'équilibrage de température (4) un deuxième dispositif d'équilibrage de température au moyen duquel au moins une couche de membrane (13) peut être équilibrée en température pour orienter la membrane (3).

2. Actionneur (1) pneumatique thermique selon la revendication 1, **caractérisé en ce que** le deuxième dispositif d'équilibrage de température présente une couche à résistance chauffante qui est formée par au moins une des couches de membrane (12, 13) du dispositif de commande et/ou est reliée par moyen thermoconducteur aux couches de membrane (12, 13).

3. Actionneur (1) pneumatique thermique selon la revendication 1 ou 2, **caractérisé en ce que** la couche à résistance chauffante est située à distance de la cavité (2) et **en ce que** la membrane (3) présente entre la couche à résistance chauffante et une couche de membrane (12) limitrophe de la cavité (2) une couche d'isolation thermique qui relie la couche à résistance chauffante à la couche de membrane (12) limitrophe de la cavité (2).

4. Actionneur (1) pneumatique thermique selon la revendication 3, **caractérisé en ce que** la couche d'isolation thermique présente plusieurs éléments de support (14) latéralement à distance les uns des autres qui sont reliés respectivement, avec une première zone d'extrémité, avec la couche à résistance chauffante et, avec une deuxième zone d'extrémité à distance de celle-ci, avec la couche de membrane (12) limitrophe de la cavité (2) et **en ce que** la couche d'isolation thermique présente au moins un espace creux (15) entre les éléments de support (14).

5. Actionneur (1) pneumatique thermique selon la revendication 4, **caractérisé en ce que** les éléments de support (14) sont reliés de façon pivotable par des points articulés avec la couche à résistance chauffante et/ou la couche de membrane (12) limitrophe de la cavité (2).

6. Actionneur (1) pneumatique thermique selon la revendication 4 ou 5, **caractérisé en ce que** les éléments de support (14) sont en matériau thermoisolant.

7. Actionneur (1) pneumatique thermique selon une quelconque des revendications 1 à 6, **caractérisé en ce que** la couche à résistance chauffante possède, aux points voisins des éléments de support (14), une section électroconductrice plus grande qu'aux points qui sont plus éloignés des éléments de support (14).

8. Actionneur (1) pneumatique thermique selon une quelconque des revendications 1 à 7, **caractérisé en ce que** le premier dispositif d'équilibrage de température (4) présente au moins un élément de Peltier (5).

9. Actionneur (1) pneumatique thermique selon une quelconque des revendications 1 à 8, **caractérisé en ce que** le dispositif d'équilibrage de température (4) possède un système de chauffage qui présente de préférence une résistance chauffante (7) électrique.

10. Actionneur (1) pneumatique thermique selon la revendication 9, **caractérisé en ce qu'**une résistance chauffante (7) est appliquée comme revêtement sur une surface de l'élément de Peltier (5) reliée par moyen thermoconducteur avec le milieu d'exploitation.

11. Relais avec un actionneur (1) thermoélectrique selon une quelconque des revendications 1 à 10 et au moins deux contacts (25, 26, 27) électriques pouvant être mis en position ouverte et en position fermée, dont au moins un est en liaison d'entraînement avec l'actionneur.

12. Interrupteur optique avec un actionneur (1) thermoélectrique selon une quelconque des revendications 1 à 10 ainsi qu'avec au moins un élément (28) actif du point de vue optique, qui est en liaison d'entraînement avec l'actionneur (1) et est déplaçable dans une première et une deuxième position de commutation, avec un émetteur (30) optique, un récepteur (31) optique affecté à celui-ci et une trajectoire de faisceau (29) située entre l'émetteur (30) et le récepteur (31), l'élément (28) optique étant disposé dans la première position de commutation dans la trajectoire de faisceau (29) et dans la deuxième position de commutation en dehors de la trajectoire de faisceau (29).

13. Micro-soupape avec un actionneur (1) thermoélectrique selon une quelconque des revendications 1 à 10 et au moins une partie de soupape en liaison d'entraînement avec celui-ci, pouvant être mise dans une position ouverte et une position fermée, disposée dans un canal d'écoulement (20).

14. Procédé destiné à la production d'un actionneur (1) pneumatique thermique pour lequel une plaquette de substrat (8) est mise à disposition, sur laquelle est appliquée une couche de contraction (16) de telle façon que la plaquette de substrat (8) est dilatée dans la plan dans lequel elle s'étend et la couche de contraction (16) est comprimée, des parois de limitation latérales (18) pour une cavité (2) étant appliquées sur la couche de contraction (16), une paroi d'un dispositif d'équilibrage de température (4) étant disposée sur les parois de limitation latérales (18) de telle façon que la paroi recouvre la cavité (2), la paroi étant reliée par une étape de liaison avec les parois de limitation latérales (18), du matériau étant enlevé pour produire une membrane (3) sur la face arrière opposée à la cavité (2) d'une zone partielle recouvrant la cavité (2) de la plaquette de substrat (8) à distance de son bord de telle façon que l'épaisseur de paroi de la plaquette de substrat (8) est plus faible dans la zone de la membrane (3) que dans la zone entourant la membrane (3) de la plaquette de substrat (8) et la membrane (3) est prétendue ou contractée de façon compressive en formant une courbure, la cavité (2) étant remplie d'un milieu d'exploitation qui modifie son volume et/ou sa pression de gaz en cas de variation de température et la cavité (2) étant en conséquence hermétiquement étanchéifiée.

15. Procédé selon la revendication 14, **caractérisé en ce que** des éléments de positionnement (19) sont générés sur la couche de contraction (16) et/ou les parois de limitation latérales (18) et **en ce que** la paroi du dispositif d'équilibrage de température (4) est insérée par complémentarité de forme entre les éléments de positionnement (19).
